# NEUE EUROPÄISCHE PATENTSCHRIFT

(11) **EP 2 742 252 B2**
(45) Veröffentlichungstag und Bekanntmachung des Hinweises auf die Entscheidung über den Einspruch: **25.11.2020**
(45) Hinweis auf die Patenterteilung: 28.10.2015
(21) Anmeldenummer: 12759630.2
(22) Anmeldetag: 26.07.2012
(51) Int. Cl.: F16D 25/10, F16D 25/12, F16D 25/0638

(54) **STATOR FÜR EINE REIBUNGSKUPPLUNG**
STATOR FOR A FRICTION CLUTCH
STATOR POUR UN EMBRAYAGE À FRICTION

(30) Priorität: 11.08.2011 DE 102011080851
(43) Veröffentlichungstag der Anmeldung: 18.06.2014
(73) Patentinhaber: Schaeffler Technologies AG & Co. KG, 91074 Herzogenaurach (DE)
(72) Erfinder: HOFSTETTER, Dirk, 76448 Durmersheim (DE); SPECK, Andre, 76316 Malsch (DE)
(74) Vertreter: Wallinger Ricker Schlotter Tostmann
(86) Internationale Anmeldenummer: PCT/DE2012/000755
(87) Internationale Veröffentlichungsnummer: WO 2013/020540

(56) Entgegenhaltungen:
- EP-A1- 2 470 808
- WO-A1-2008/080381
- WO-A1-2011/023407
- DE-A1- 10 035 004
- DE-A1- 10 143 834
- DE-A1-102009 059 928
- US-A1- 2005 067 251
- US-A1- 2007 256 907
- US-A1- 2008 236 983
- US-A1- 2009 123 318
- US-A1- 2010 163 364

## Beschreibung

Die vorliegende Erfindung betrifft einen "gebauten" (d.h. mehrteiligen) Stator für eine Reibungskupplung. Ein solcher "gebauter" Stator kann Bestandteil einer axial geschachtelten, nassen Doppelkupplungen sein. Prinzipiell ist der Einsatz auch aber bei radial geschachtelten Doppelkupplungen möglich. Der Stator übernimmt hierbei die Funktion der axialen Lagerung der eigentlichen Kupplung, die Zentrierung der Kupplung im Gehäuse, sowie die Ölübergabe vom Getriebe- oder Motorgehäuse in die drehende Kupplung.

Grundsätzlich sind "gebohrte" Statorausführungen bekannt, bei denen Ölführungsleitungen in einen einteiligen Stator als Bohrungen eingeformt werden. Nachteilig an solchen gebohrten Ausführungen sind die hohen Fertigungskosten und die hohe Wandreibung (und der damit verbundene hohe Reibungswiderstand für das Öl) wegen der großen Anzahl an Bohrungen, welche notwendig sind, um einen ausreichenden Gesamtdurchflussquerschnitt zu erreichen. Die Vielzahl an Bohrungen im Innenbereich der Lagerlaufbahnen des Stators kann zudem zu einem ungünstigem Tragbild der Lager und/oder zu einem akustischen Problem führen.

Aus der DE102005044227 DE 10143834A1 und der EP1195537 sind "gebaute" Statorausführungen bekannt. Die hieraus bekannten Statorausführungen umfassen ein äußeres hülsenförmiges Bauteil und ein inneres hülsenförmiges Bauteil, die ineinander geschachtelt angeordnet sind, wobei eine innere Mantelfläche des äußeren hülsenförmigen Bauteils mit der äußeren Mantelfläche des inneren hülsenförmigen Bauteils Ölführungsbereiche bilden, und wobei die innere Mantelfläche des äußeren hülsenförmigen Bauteil zylindrisch ausgebildet ist und in der äußeren Mantelfläche des inneren hülsenförmigen Bauteils Ölführungskanäle eingeformt sind. Auch aus der DE 38 19 702 A1 ist eine hydraulisch betätigbare Doppelnasskupplung mit axial hintereinander angeordneten Einzelkupplungen und mit einem gebauten Stator bekannt, wobei der hieraus bekannt Stator ein zylindrisches inneres hülsenförmiges Bauteil mit einem äußeren hülsenförmigen Bauteil mit Vertiefungen aufweist. Diese Vertiefungen bilden Druckzuführungen Kühlölzuführung.

Nachteilig an solchen gebauten Statorausführungen sind die ebenfalls hohen Fertigungskosten, da die innere Hülse zerspant werden muss (Drehen der inneren und äußeren Mantelfläche sowie Fräsen der Nuten). Außerdem muss bei den bekannten Ausführungen "gebauter" Statoren zusätzlich zum Kühlöl (mit geringem Druck aber bei hohem Volumenstrom) auch noch das Anpressöl (mit hohem Druck aber niedrigem Volumenstrom) durch die gefrästen Nuten geführt werden. Die Abdichtung zwischen den unterschiedlichen Nuten ist gerade bei Aufbauten nach der DE 38 19 702 A1 kritisch bis unmöglich.

Es ist daher die Aufgabe der vorliegenden Erfindung den Stator gemäß dem Oberbegriff der vorliegenden Erfindung dahingehend zu verbessern, dass Kühlöl - bei geringem Druck aber hohen Volumenströmen- und Anpressöl - bei hohem Druck aber sehr niedrigen Volumenströmen - zuverlässig abgedichtet werden können, vorzugsweise bei einer Reduktion von Aufwand und Kosten.

Diese Aufgabe wird erfindungsgemäß gelöst durch einen Stator für eine Reibungskupplung mit nasslaufenden Lamellen, wobei die Kupplung auf dem Stator gelagert ist, und der Stator die Kupplung mit Kühl- und Druckmedium versorgt, wobei der Stator ein äußeres hülsenförmiges Bauteil und ein inneres hülsenförmiges Bauteil aufweist, die ineinander geschachtelt angeordnet sind, wobei eine innere Mantelfläche des äußeren hülsenförmigen Bauteils mit der äußeren Mantelfläche des inneren hülsenförmigen Bauteils gemeinsam zumindest einen Kühlmediumführungskanal bilden, und wobei das äußere hülsenförmige Bauteil zumindest eine vom Kühlmediumführungskanal separate Bohrung als Zufuhrkanal für Druckmedium zur Steuerung der Kupplung aufweist, und diese Bohrung vollständig im äußeren zylindrischen Bauteil ohne Beteiligung des inneren zylindrischen Bauteils ausgebildet ist.

Der Kühlmediumkanal kann daher so ausgeführt werden, das sich ein sehr großer Querschnitt im vorhanden Bauraum ergibt. Die Dichtfläche kann wegen des geringen Kühlöldrucks sehr schmal ausgeführt werden und verringert somit den Kühlölquerschnitt nur gering. Zusätzlich kann ein Verlöten, Verschweißen, Verkleben von innerer Hülse und äußerer Hülse die Dichtheit erhöhen. Auch ist ein Einlegen eines separaten Dichtelements möglich.

Der Kühlmediumkanal in der äußeren Hülse wird werkzeugfallend geschmiedet. Auch die innere Hülse kann werkzeugfallend gezogen werden. Durch den durch Umformen hergestellten Kanal in der äußeren Hülse kann lokal im Übergangsbereich von Getriebe- oder Motorgehäuse und Stator eine sehr große und strömungsgünstige Fase kostengünstig hergestellt werden. Der Druckabfall an dieser Übergabestelle wird somit drastisch reduziert.

Im Vergleich zu Lösungen mit sehr vielen einzelnen Bohrungen zur erfindungsgemäßen Ausführung des "gebauten" Stators kann das Verhältnis zwischen hydraulischem Querschnitt und Wandumfang drastisch reduziert werden.

Weiterhin kann im Innenbereich der Lagerlaufbahnen eine geringere Schwankungen der Wandstärke realisiert werden im Vergleich zu "gebohrten" Varianten. Dadurch entsteht ein verbessertes Tragbild der Lager sowie eine reduzierte Anregung zu Schwingungen bzw. Geräuschen.

Nur die Druckölzuführung wird bei der erfindungsgemäßen Ausführung gebohrt. Da lokal genügend Material in der äußeren Hülse vorhanden ist, ergibt sich eine garantierte Dichtheit der Druckölzuführungen. Die Kosten hierfür sind von geringer Bedeutung, da für das Drucköl nur wenig hydraulischer Querschnitt notwendig ist (Bsp.: bei bisherigen, gebohrten Statoren sind für das Drucköl jeweils 2 Bohrungen vorhanden, für das Kühlöl sind es jeweils 10 Bohrungen).

Die innere Hülse dient neben der Kühlmediumführung/-abdichtung auch als Zentrierbund zur Zentrierung der Kupplung im Kupplungsgehäuse.

Weitere bevorzugte Ausführungsformen sind Gegenstand der abhängigen Ansprüche.

Die vorliegende Erfindung wird nachfolgend anhand bevorzugter Ausführungsbeispiele in Verbindung mit den zugehörigen Figuren näher erläutert. In diesen zeigen:
- Fig. 1: eine schematische Darstellung eines Ausführungsbeispieles einer Doppelnasskupplung,
- Fig. 2: eine erste Ausführungsform einer Doppelnasskupplung mit gebautem Stator;
- Fig. 3: eine räumliche Darstellung einer ersten Ausführungsform des vorliegenden gebauten Stators, bestehend aus einer äußeren Hülse (der auch als "äußerer Stator" bezeichnet wird) und einer inneren Hülse (die auch als "Innenhülse" bezeichnet wird);
- Fig. 4: eine Draufsicht auf die Verbindungsfläche zwischen Stator und Getriebegehäuse bzw. aus Blickrichtung des Getriebes;
- Fig. 5: eine Schnittdarstellung entlang der Schnittebene B-B in Fig. 4, und
- Fig. 6: eine Schnittdarstellung entlang der Schnittebene C-C in Fig. 4

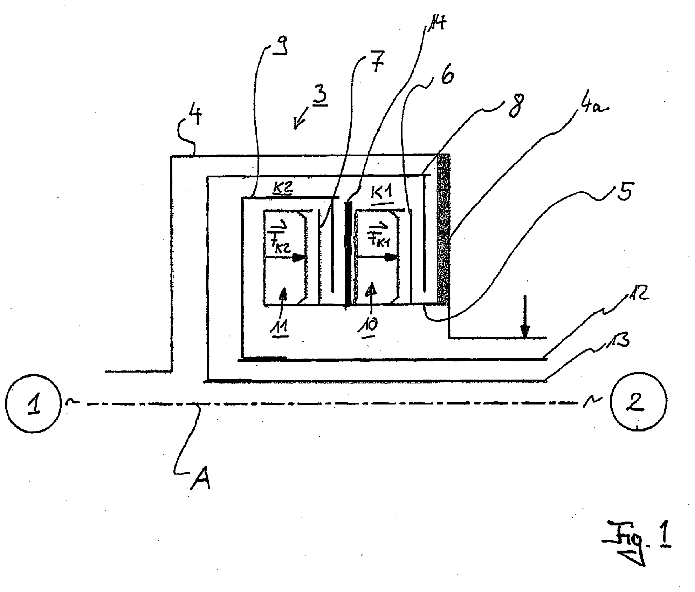

Fig. 1 zeigt schematisch einen Antriebstrang eines Fahrzeuges mit einem Antrieb 1, einem Doppelkupplungsgetriebe 2 und einer zwischen Antrieb 1 und Doppelkupplungsgetriebe 2 angeordneten Doppelkupplungseinrichtung 3. Das vom Antrieb 1 (vorzugsweise einem Verbrennungsmotor oder einem Elektroantrieb oder einer Kombination aus Verbrennungsmotor und Elektroantrieb) erzeugte Drehmoment wird dabei über das Kupplungsgehäuse 4 um die Doppelkupplungsanordnung 3 herumgeleitet und an eine Kupplungsnabe 5 übertragen. Die Kupplungsnabe 5 ist mit einem Eingangslamellenträger 6 einer ersten Einzelkupplung K1 und einem Eingangslamellenträger 7 einer zweiten Einzelkupplung K2 verbunden. Die Einzelkupplungen K1 und K2 umfassen Lamellenpakete (in Fig. 1 nicht im Einzelnen gezeigt), welche jeweils aus zumindest einer eingangsseitigen Reiblamelle und einer ausgangsseitigen Reiblamelle bestehen. Die ausgangsseitigen Reiblamellen sind mit einem Ausgangslamellenträger 8 für die Einzelkupplungen K1 und einem Ausgangslamellenträger 9 für die Einzelkupplung K2 verbunden. Die Ausgangslamellenträger sind ineinander geschachtelt angeordnet. Der äußere Ausgangslamellenträger 8 ist axial länger ausgebildet als der innere Ausgangslamellenträger 9, und zwar in der Form, dass dieser mit seinem Formschlussbereich, an dem die Lamellen eingehängt sind, bis zum Lamellenpaket der getriebeseitigen Einzelkupplung reicht. Über die Betätigungseinrichtungen 10 und 11 können die eingangsseitigen und ausgangsseitigen Reiblamellen in Reibkontakt miteinander gebracht werden, wobei eine mögliche Richtungswahl der jeweiligen Betätigungskräfte über den Kraftvektorpfeil F_{K1} und F_{K2} für die Einzelkupplungen K1 und K2 Figur 1 ersichtlich ist. Die Ausgangslamellenträger 8 und 9 sind mit den beiden Getriebeeingangswellen 12 und 13 des Doppelkupplungsgetriebes verbunden. In Fig. 1 ist die Hauptachse der Doppelkupplungsanordnung 3 mit dem Bezugszeichen A gezeigt.

Weiterhin ist in Fig. 1 der Teilbereich 4a des Kupplungsgehäuses symbolisch hervorgehoben, um darzustellen, dass bei der vorliegenden nasslaufenden Doppelkupplung mit axial angeordneten Teilkupplungen (Einzelkupplungen) die Betätigungskraft der Teilkupplung K1 über ein Bauteil abgestützt wird, welches gleichzeitig auch das Antriebsmoment in das Kupplungssystem einleitet. Das Kupplungsgehäuse erfüllt vorliegend also eine Doppelfunktion.

Über den ebenfalls symbolisch hervorgehobenen Bereich 14 soll zudem verdeutlicht werden, dass eine Abstützung der Betätigungskraft der Teilkupplung K2 über das zusätzliche Bauteil 14 erfolgt, welches im Wesentlichen unabhängig von der Abstützung 4a am Kupplungsgehäuse 4 ist. Dadurch wird verhindert, dass sich die Teilkupplungen K1 und K2 beim Betätigen gegenseitig beeinflussen (Übersprechverhalten).

Die Teilkupplungen könnten dabei auch - entgegen der Ausgestaltung des Ausführungsbeispieles in Fig. 1 - auch beide in Richtung Antrieb betätigt werden.

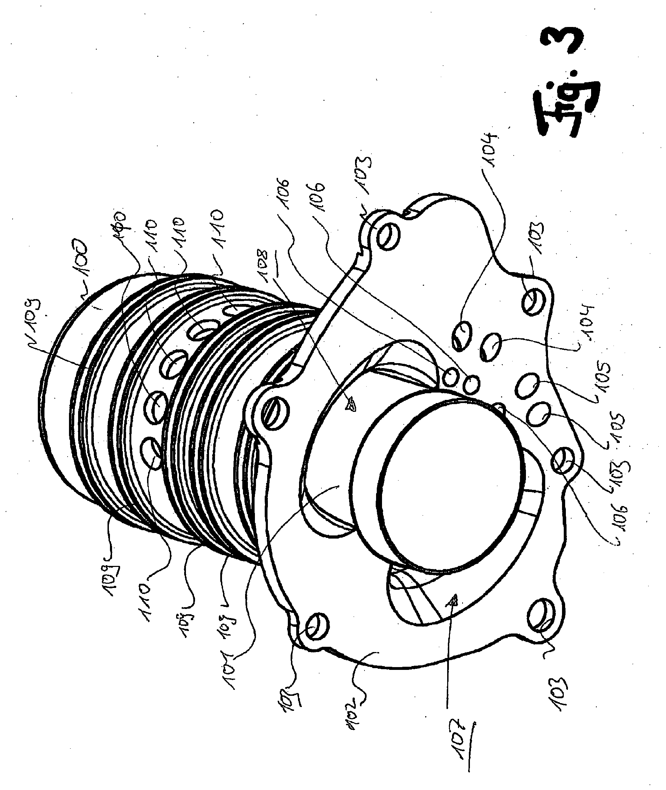

Denkbar wäre auch an Anordnung, bei der die Teilkupplungen K1 und K2 in einander entgegengesetzte axiale Richtungen, also gewissermaßen "von innen nach außen" betätigt werden, wie nachfolgend anhand Figur 3 erläutert. Dabei befinden sich dann die Betätigungselemente der Teilkupplungen axial zwischen den beiden Lämellenpaketen. Bei der Betätigung in axial entgegengesetzte Richtungen ist es zudem möglich, die Druckräume der Betätigungselemente durch einen gemeinsamen Dichtungsträger, der die Kolbendichtung für beide Teilkupplungen trägt, zu bilden.

Der Darstellung von Fig. 1 ist weiterhin entnehmbar, dass das Kupplungsgehäuse 4 als Kupplungstopf mit integral ausgebildetem Abstützbereich zur Abstützung der axialen Betätigungskraft der getriebeseitigen Einzelkupplung ausgebildet sein kann.

Außerdem ist der Darstellung der Fig. 1 entnehmbar, dass die innenliegenden Eingangslamellenträger mit der Kupplungsnabe verbunden sind.

Des Weiteren ist der Darstellung der Fig. 1 entnehmbar, dass auch das zusätzliche Stützelement 14 mit der Kupplungsnabe verbunden sein kann.

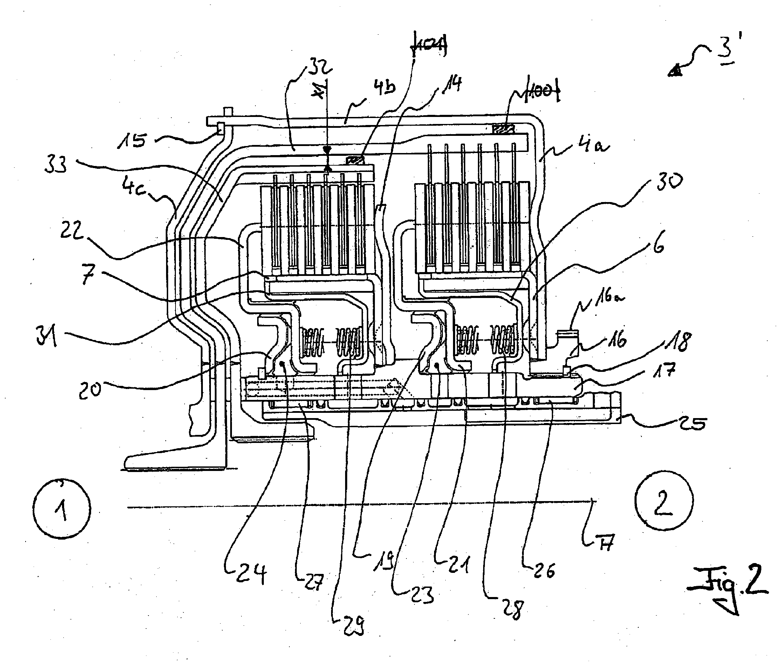

In Fig. 2 ist eine Ausgestaltung dargestellt, bei der die Betätigungskräfte den in Fig. 1 dargestellten Kraftvektoren F_{K1} und F_{K2} entsprechen. Dabei zeigt Fig. 2 einen Halbschnitt entsprechend der Kupplungshauptachse A. Das Kupplungsgehäuse 4 ist hierbei zweiteilig aus einem Kupplungskopf mit dem Bodenbereich 4a und dem zylindrischen Wandbereich 4b und einem Mitnahmeblech 4c gebildet, wobei das Mitnahmeblech 4c und der zylindrische Wandbereich 4b formschlüssig miteinander drehverbunden und axial über einen Sicherungsring 15 gesichert sind. Der Bodenbereich 4a, der auch zur Abstützung der axialen Betätigungskraft der Kupplung K1 dient, ist mit einem Abtriebsbauteil 16 fest verbunden, über das eine Pumpe zur Förderung des Hydraulikmediums antreibbar ist. Das Bauteil 16 weist entsprechend eine Verzahnung 16a zur Übertragung von Drehmoment an eine Hydraulikpumpe auf. Das Bauteil 16 umfasst weiterhin eine radial innen liegende Axialverzahnung, zur Verbindung mit einer Kupplungsnabe 17. Die zwischen dem Bauteil 16 und Kupplungsnabe 17 vorgesehene axiale Steckverzahnung könnte auch über eine Passfederverbindung oder eine andere Drehmoment übertragende Verbindung ersetzt werden. Diese axiale Steckverzahnung oder ähnliche Verbindung ist vorliegend über einen Sicherungsring oder eine ähnliche Sicherungseinrichtung, beispielsweise eine Wellenmutter 18 gesichert.

Fig. 2 zeigt zudem den Eingangslamellenträger 6 der Teilkupplung K1, wobei der Eingangslamellenträger 6 vorliegend mit dem Bauteil 16 verbunden ist, so dass eine Drehmomentübertragung unmittelbar über dieses Bauteil 16 erfolgt. Alternativ könnte der Eingangslamellenträger 6 auch direkt an der Kupplungsnabe 17 angeordnet sein.

Fig. 2 zeigt zudem den Eingangslamellenträger 7 der Teilkupplung K2, der direkt an der Kupplungsnabe 17 angebunden ist. Zwischen den Eingangslamellenträger 7 der Teilkupplung K2 und einem Absatz an der Kupplungsnabe 17 ist das zusätzliche Abstützbauteil 14 angeordnet. Dabei ist es ausreichend, dass das zusätzliche Bauteil 14 gegen Verdrehung und gegen Verschiebung in Richtung Getriebe gegenüber der Kupplungsnabe 17 abgestützt wird. Eine zusätzliche axiale Fixierung in Richtung Antrieb ist vorliegend nicht zwingend erforderlich. Abstützbauteil 14 und Eingangslamellenträger 7 könnten auch integral ausgebildet sein.

An der Kupplungsnabe 17 sind zudem Dichtbleche 19 und 20 angeordnet, welche als Dichtungsträger für die beiden hydraulischen Kolben-Zylinder-Einheiten zur Betätigung der Teilkupplungen K1 und K2 wirken. Zwischen den Dichtblechen 19 und 20 und Betätigurigskolben 21 und 22 der Teilkupplung K1 und K2 und entsprechenden Teilbereichen der Mantelflächen der Kupplungsnabe 17 werden die Druckräume 23 und 24 gebildet. Diese Druckräume 23 und 24 werden über die Kupplungsnabe 17 sowie einem innen liegenden Ölzuführ- und Abstützbauteil 25 mit Hydraulikmedium versorgt. Zwischen diesem innen liegenden Abstützbauteil 25 und der Kupplungsnabe 17 sind zumindest zwei Radiallager 26 und 27 sowie mehrere Dichtelemente angeordnet.

Vorliegend werden die Betätigungskolben 21 und 22 über Federelemente 28 und 29 in Richtung "Kupplung offen" vorbelastet (wobei allerdings auch eine Vorlast in Richtung "Kupplung geschlossen" zumindest einer der Kupplungen denkbar ist, wodurch sich energetische Vorteile ergäben). Die vorliegend als Schraubenfedern ausgebildeten Federelemente 28 und 29 sind hierbei jeweils an einem Stützbauteil 30 und 31 abgestützt. Dieses Bauteil 30 und 31 wiederum ist am entsprechenden Eingangslamellenträger 6 bzw. 7 axial abgestützt.

Das über die Lamellenpakete der Teilkupplungen K1 und K2 bei Anlegen einer entsprechenden Betätigungskraft übertragbare Drehmoment wird über die Ausgangslamellenträger 32 und 32 an die (in Fig. 2 nicht im Einzelnen gezeigten) Getriebeeingangswellen übertragen, wobei vorliegend die beiden Getriebeeingangswellen als ineinander geschachtelte Vollwelle und Hohlwelle ausgebildet und konzentrisch zueinander angeordnet sind.

Bei der in Fig. 2 gezeigten Ausgestaltung erfolgt eine Beaufschlagung der Einzelkupplungen mit Betätigungskraft in beiden Fällen in Richtung auf das Getriebe hin, wobei die Betätigungskraft der getriebeseitigen Teilkupplung K1 am Kupplungstopf und die Betätigungskraft der antriebsseitigen Teilkupplung K2 an dem separaten Stützelement erfolgt, wobei das Stützelement 14 kein Bestandteil der Kolben-Zylinder-Einheit der zugehörigen Einzelkupplung bildet und ggf. mit dem Eingangslamellenträger 7 integral ausgebildet werden könnte.

In axialer Richtung ist die in Fig. 2 gezeigte Kupplung über axiale Lager zwischen Mitnahmeblech 4c und Ausgangslamellenträger 32 sowie zwischen Ausgangslamellenträger 32 und Ausgangslamellenträger 33 sowie zwischen Ausgangslamellenträger 33 und Stirnseite der Kupplungsnabe 17 in Verbindung mit dem Sicherungselement 18 verspannt. Weiterhin ist das innen liegende Bauteil 25 entweder über eine der Getriebeeingangswellen oder über eine Verbindung zur Kupplungsglocke abgestützt.

Die in Figur 2 gezeigt Kupplungsnabe 17 dreht bei rotierendem Drehmomentübertragungssystem mit und stützt sich hierfür auf dem in Figur 2 gezeigten innenliegenden Ölzufuhr- und Abstützbauteil 25 über die Lager 26 und 27 sowie über mehrere Dichtungselementen ab dieser Aufbau entspricht dem Eingangs erläuterten klassischen "gebauten" Stator. Demgegenüber ist in Figur 3 eine räumliche Darstellung des vorliegenden gebauten Stators, bestehend aus einer äußeren Hülse 100 und einer inneren Hülse 101 gezeigt. In dieser Darstellung ist auch die Verbindungsfläche 102 zwischen der äußeren Hülse 101 und dem Getriebegehäuse erkennbar, wobei im äußeren Bereich der Verbindungsfläche mehrere 102 Verschraubungsbereiche 103 zur Verbindung des Stators mit dem Getriebegehäuse vorgesehen sind. Weiterhin sind mehrere Bohrungen 104 sowie 105 vorgesehen, welche als Druckmediumzuführungen zu den Druckkammern der Einzelkupplungen K1 und K2 vorgesehen sind. Diese vorliegend schrägen Bohrungen führen zu axial erstreckten Bohrungen im zylindrischen Teil der äußeren Hülse 100. Diese Bohrungen sind über die Verschlusselemente 106 verschlossen. Aus Figur 3 ist zudem der Einströmbereich 107 für das Kühlmedium einer der Einzelkupplungen K1 oder K2 sowie der Einströmbereich 108 für das Kühlmedium der anderen der Einzelkupplungen K1 und K2 ersichtlich. Weiterhin sind im zylindrischen Bereich der äußeren Hülse neben den Aufnahmebereichen 109 für Dichtelemente noch die Kühlmediumausströmöffnungen 110 für eine der beiden Einzelkupplungen entnehmbar.

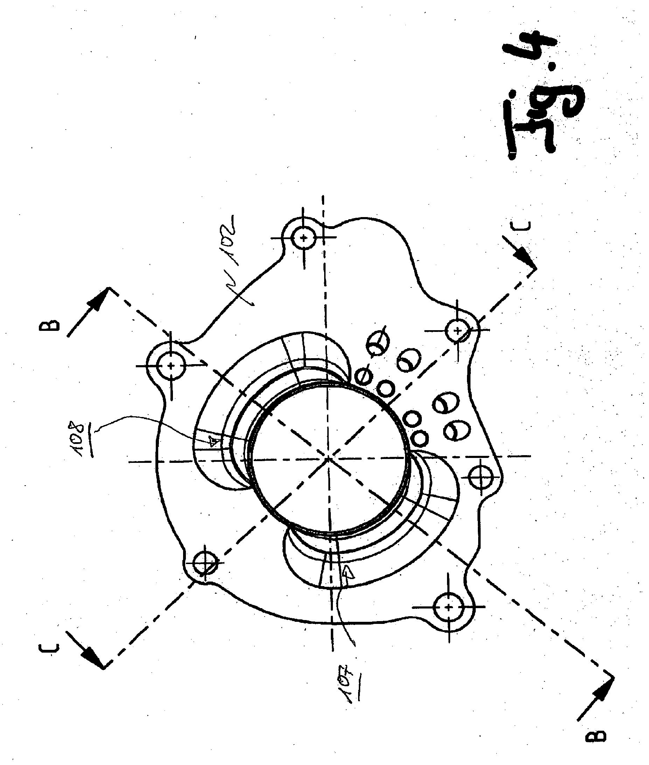

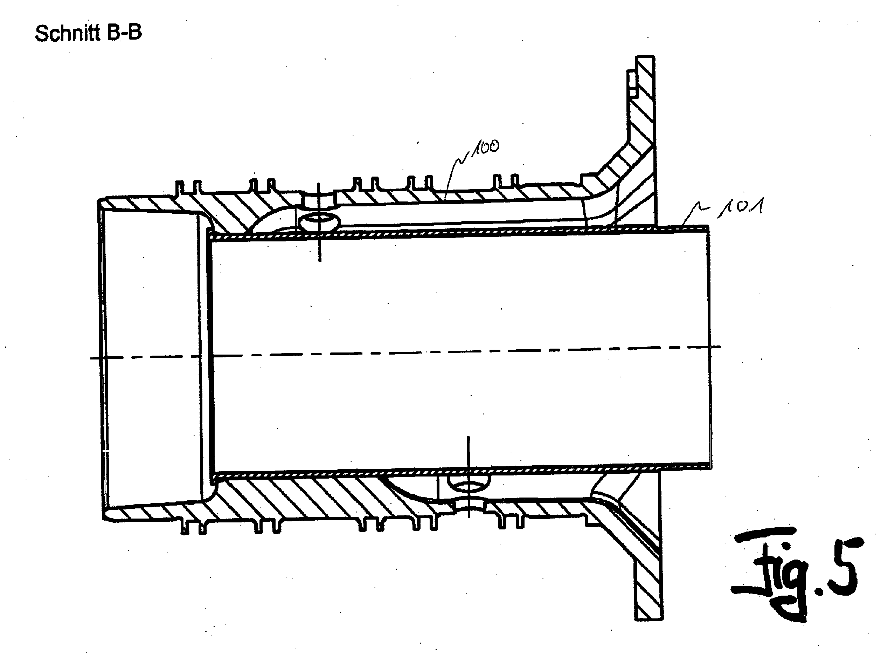

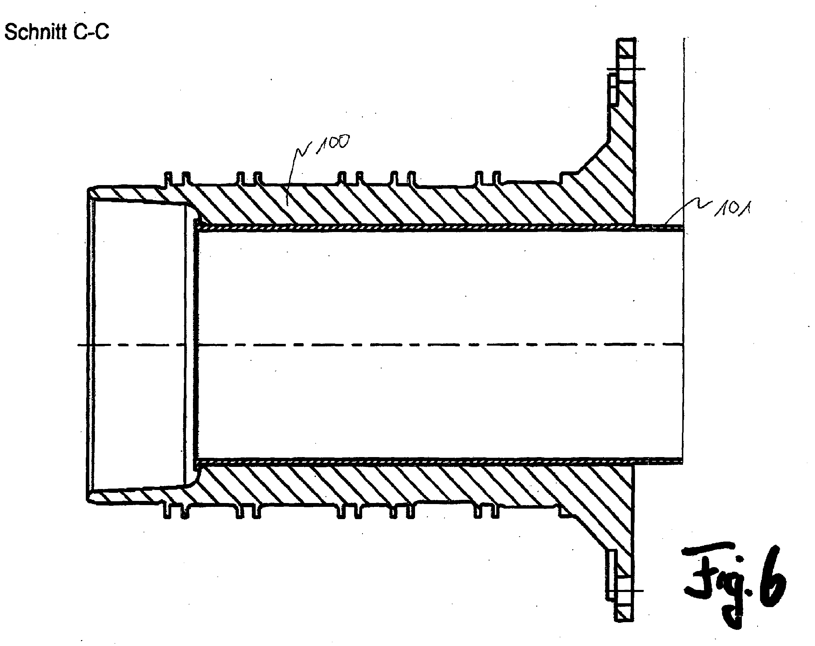

In Figur 4 ist eine Draufsicht auf die Verbindungsfläche 103 zwischen Stator und Getriebegehäuse gezeigt, wobei zwei Schnittebenen B-B und C-C eingezeichnet sind, welche in Figur 5 bzw. in Figur 6 abgebildet sind. Dabei ist in Figur 5 (Schnitt entlang der Schnittebene B-B) ein Bereich des Stators gezeigt, in welchem die Kühlölkanäle ausgebildet sind, wohingegen in Figur 6 (Schnitt entlang der Schnittebene C-C) Bereiche dargestellt sind, in welchen der äußere Stator 100 an der Innenhülse 101 anliegt, also vorliegend die beiden Kühlölkanäle 107 und 108 gegeneinander abgedichtet sind.

Dabei zeigt gerade Figur 5 den Einlaufbereich sowie den Kühlölkanal bzw. die Kühlölkanäle, welche unmittelbar in dem äußeren Stator ausgebildet sind, wohingegen die Innenhülse als rein zylindrisches Bauteil ("als Rohr") ausgebildet ist.

Die vorstehende Beschreibung bezieht sich auf einen gebauten Stator als Bestandteil einer vorwiegend axial geschachtelten, nassen Doppelkupplung. Prinzipiell ist der Einsatz auch bei radial geschachtelten Doppelkupplungen möglich. Der Stator übernimmt hierbei die Funktion der axialen Lagerung der eigentlichen Kupplung, und evtl. die Zentrierung der Kupplung im Kupplungsgehäuse, sowie die Ölübergabe vom Getriebegehäuse in die drehende Kupplung. Hierbei ist zwischen dem Anpressöl K1 und K2 (hoher Druck, geringer Volumenstrom) und dem Kühlöl K1 und K2 (geringer Druck, hoher Volumenstrom) zu unterscheiden. Um hohe Rückstaudrücke beim Kühlöl zu vermeiden werden besonders hier große Querschnitte notwendig.

Die Kanäle im Stator sind so ausgeführt, das sich sehr große Querschnitte im vorhanden Bauraum realisieren lassen. Die Dichtflächen zwischen den beiden Kühlölkanälen können wegen des geringen Kühlöldrucks sehr schmal ausgeführt werden und verringern somit den Kühlölquerschnitt nur gering. Zusätzlich kann ein Verlöten und/oder Verschweißen und/oder Verkleben von innerer Hülse und äußerer Hülse die Dichtheit erhöhen. Auch ist das Einlegen eines separaten Dichtelements möglich.

Der Kühlmediumkanal in der äußeren Hülse wird werkzeugfallend geschmiedet. Die innere Hülse wird werkzeugfallend gezogen. Somit ergibt sich eine kostengünstig zu fertigende Gesamtkonstruktion.

Der Übergang für das Kühlöl zwischen Gehäuse und äußerer Hülse wird optimiert. Durch die, durch Umformen hergestellten, Kanäle in der äußeren Hülse können lokal im Übergangsbereich von Gehäuse und Hülse sehr große und strömungsgünstige Fasen kostengünstig hergestellt werden. Der Druckabfall an dieser Übergabestelle wird somit drastisch reduziert.

Im Vergleich zu Lösungen mit sehr vielen einzelnen Bohrungen zur Variante mit gebautem Stator kann das Verhältnis zwischen hydraulischem Querschnitt und Wandumfang drastisch reduziert werden. Insbesondere der große Einfluss der Wandreibung auf den Rückstaudruck bei geringeren Temperaturen wird verbessert.

Die Druckölzuführungen werden weiterhin gebohrt, da lokal genügend Material im äußeren Stator vorhanden ist. Dies führt zur garantierten Dichtheit der Druckölzuführungen. Die Kosten hierfür sind von geringer Bedeutung, da für das Drucköl nur wenig hydraulischer Querschnitt notwendig ist, d.h. nur wenige Bohrungen sind notwendig.

Die innere Hülse kann neben der Ölführung/-abdichtung als Zentrierbund zur Zentrierung der Kupplung im Gehäuse dienen.

## Patentansprüche

1. Stator für eine Reibungskupplung mit nasslaufenden Lamellen,
wobei die Kupplung auf dem Stator gelagert ist, und der Stator die Kupplung mit Kühl und Druckmedium versorgt,
wobei der Stator ein äußeres hülsenförmiges Bauteil (100) und ein inneres hülsenförmiges Bauteil (101) aufweist, die ineinander geschachtelt angeordnet sind,
wobei eine innere Mantelfläche des äußeren hülsenförmigen Bauteils mit der äußeren Mantelfläche des inneren hülsenförmigen Bauteils gemeinsam zumindest einen Kühlmediumführungskanal definieren, und
wobei das äußere hülsenförmige Bauteil zumindest eine vom Kühlmediumführungskanal separate Bohrung (104, 105) als Zufuhrkanal für Druckmedium zur Steuerung der Kupplung aufweist, **dadurch gekennzeichnet, dass** diese Bohrung vollständig im äußeren zylindrischen Bauteil ohne Beteiligung des inneren zylindrischen Bauteils ausgebildet ist, wobei das äußere hülsenförmige Bauteil (100) an einem Getriebegehäuse oder Antriebsgehäuse angebunden ist, wobei das innere hülsenförmige Bauteil (101) als Vorzentrierung für die Kupplung beim Einbau in die Kupplungsglocke vorgesehen ist, und
wobei das äußere hülsenförmige Bauteil (100) als Schmiedeteil ausgebildet ist, wobei der zumindest eine Kühlmediumführungskanal im Rahmen des Schmiedevorgangs mit ausgebildet wird.

2. Stator gemäß Anspruch 1, wobei die äußere Mantelfläche des inneren hülsenförmigen Bauteil (101) zylindrisch ausgebildet ist, wobei in der inneren Mantelfläche des äußeren hülsenförmigen Bauteils (100) zumindest eine kanalartige Vertiefungen ausgebildet ist, und wobei die innere Mantelfläche des äußeren hülsenförmigen Bauteils an der äußeren Mantelfläche des inneren hülsenförmigen Bauteils in zumindest einem Anlagebereich anliegt, so dass eine hydraulische Dichtung zwischen den beiden hülsenartigen Bauteilen zur Abdichtung des Kühlmediumführungskanals gebildet ist.

3. Stator gemäß einem der Ansprüche 1 bis 3, **dadurch gekennzeichnet, dass** im getriebeseitigen Randbereich des äußeren hülsenförmigen Bauteils (100) ein Einlaufbereich für das Kühlmedium gebildet ist, so dass der zumindest eine Kühlmediumführungskanal einen erweiterten Fluideinlaufquerschnitt aufweist.

4. Stator gemäß einem der Ansprüche 1 bis 3, **dadurch gekennzeichnet, dass** das innere hülsenförmige Bauteil (101) und das äußere hülsenförmige Bauteil (100) miteinander verpresst und/oder über zumindest eine Lötverbindung miteinander verbunden sind.

5. Stator gemäß einem der Ansprüche 1 bis 5, **dadurch gekennzeichnet, dass** an der inneren Mantelfläche des äußeren Bauteils (100) ein Zentrierungsbund zur Zentrierung des inneren hülsenförmigen Bauteils (101) vorgesehen ist.

6. Reibungskupplung mit einem Stator mit den Merkmalen gemäß einem der Ansprüche 1 bis 5.

7. Stator für eine Doppelkupplung (3) mit zwei Einzelkupplungen mit nasslaufenden Lamellen, wobei die Doppelkupplung (3) auf einem gemeinsamen Stator gelagert ist, der die Doppelkupplung mit Kühl- und Druckmedium für die beiden Einzelkupplungen versorgt,
wobei der gemeinsame Stator ein äußeres hülsenförmiges Bauteil (100) und ein inneres hülsenförmiges Bauteil (101) aufweist, die ineinandergeschachtelt angeordnet sind,
wobei eine innere Mantelfläche des äußeren hülsenförmigen Bauteils (100) mit der äußeren Mantelfläche des inneren hülsenförmigen Bauteils (101) gemeinsam zumindest zwei voneinander hydraulisch getrennte Kühlmediumführungskanäle definieren,
und
wobei das äußere hülsenförmige Bauteil (100) zumindest zwei von den Kühlmediumführungskanälen separate Bohrungen (104, 105) als Zufuhrkanal für Druckmedium zur Steuerung der Kupplung (3) aufweist, und diese Bohrungen vollständig im äußeren zylindrischen Bauteil (100) ohne Beteiligung des inneren zylindrischen Bauteils (101) ausgebildet sind, wobei das innere zylindrische Bauteil neben der Kühlmediumführung/-abdichtung auch als Zentrierbund zur Zentrierung der Kupplung im Kupplungsgehäuse dient, und
wobei das äußere hülsenförmige Bauteil (100) als Schmiedeteil ausgebildet ist, wobei der zumindest eine Kühlmediumführungskanal im Rahmen des Schmiedevorgangs mit ausgebildet wird.

8. Stator gemäß Anspruch 7, wobei die äußere Mantelfläche des inneren hülsenförmigen Bauteil (101) zylindrisch ausgebildet ist, wobei in der inneren Mantelfläche des äußeren hülsenförmigen Bauteils (100) zumindest zwei kanalartige Vertiefungen ausgebildet sind, und wobei die innere Mantelfläche des äußeren hülsenförmigen Bauteils (100) an der äußeren Mantelfläche des inneren hülsenförmigen Bauteils (101) in zumindest zwei Anlagebereich anliegt, so dass eine hydraulische Dichtung zwischen den beiden hülsenartigen Bauteilen zur Abdichtung der zumindest zwei Kühlmediumführungskanäle gebildet ist.

9. Doppelkupplung nach Anspruch 8, wobei die hülsenförmigen Bauteile im Bereich der Anlagebereiche miteinander verbunden, insbesondere verlötet sind.

## Claims

1. A stator for a friction clutch with wet-running discs,
the clutch being mounted on the stator and the stator supplying the clutch with cooling and pressure medium,
the stator having an outer sleeve-shaped component (100) and an inner sleeve-shaped component (101), which are arranged so as to be nested inside one another,
an inner circumferential face of the outer sleeve-shaped component together with the outer circumferential face of the inner sleeve-shaped component jointly defining at least one cooling medium guiding duct, and
and the outer sleeve-shaped component having at least one bore (104, 105) which is separate from the cooling medium guiding duct as a feeding duct for pressure medium for controlling the clutch, **characterized in that** the said bore is configured completely in the outer cylindrical component without involvement of the inner cylindrical component, the outer sleeve-shaped component (100) being connected to a transmission housing or drive housing, the inner sleeve-shaped component (101) being provided as pre-centering for the clutch when it is installed in the clutch bell, and
wherein the outer sleeve-shaped component (100) is configured as a forged part, the at least one cooling medium guiding duct being formed as part of the forging process.

2. The stator according to claim 1, the outer circumferential face of the inner sleeve-shaped component (101) being of cylindrical configuration, at least one duct-shaped depression being formed in the inner circumferential face of the outer sleeve-shaped component (100), and the inner circumferential face of the outer sleeve-shaped component bearing against the outer circumferential face of the inner sleeve-shaped component in at least one bearing region, with the result that a hydraulic seal is formed between the two sleeve-shaped components for sealing the cooling medium guiding duct.

3. The stator according to one of claims 1 through 3, **characterized in that** an inlet region for the cooling medium is formed in the transmission-side edge region of the outer sleeve-shaped component (100), with the result that the at least one cooling medium guiding duct has a widened fluid inlet cross section.

4. The stator according to one of claims 1 through 3, **characterized in that** the inner sleeve-shaped component (101) and the outer sleeve-shaped component (100) are pressed onto one another and/or are connected to one another via at least one brazed connection.

5. The stator according to one of claims 1 through 5, **characterized in that** a centering collar is provided on the inner circumferential face of the outer component (100) for centering the inner sleeve-shaped component (101).

6. A friction clutch having a stator having the features according to one of claims 1 through 5.

7. The stator for a double clutch (3) with two individual clutches with wet-running discs, the double clutch (3) being mounted on a common stator which supplies the double clutch with cooling and pressure medium for the two single clutches,
the common stator having an outer sleeve-shaped component (100) and an inner sleeve-shaped component (101) which are arranged so as to be nested inside one another,
an inner circumferential face of the outer sleeve-shaped component (100) together with the outer circumferential face of the inner sleeve-shaped component (101) jointly defining at least two cooling medium guiding ducts which are hydraulically disconnected from one another,
and
the outer sleeve-shaped component (100) having at least two bores (104, 105) which are separate from the cooling medium guiding ducts as feed duct for pressure medium for controlling the clutch (3), and the said bores being configured completely in the outer cylindrical component (100) without involvement of the inner cylindrical component (101), the inner cylindrical component serving not only for the cooling medium guiding/seal but also as a centering collar for centering the clutch in the clutch housing, and
wherein the outer sleeve-shaped component (100) is configured as a forged part, the at least one cooling medium guiding duct being formed as part of the forging process.

8. The stator according to claim 7, the outer circumferential face of the inner sleeve-shaped component (101) being of cylindrical configuration, at least two duct-shaped depressions being configured in the inner circumferential face of the outer sleeve-shaped component (100), and the inner circumferential face of the outer sleeve-shaped component (100) bearing against the outer circumferential face of the inner sleeve-shaped component (101) in at least two bearing regions, with the result that a hydraulic seal is formed between the two sleeve-shaped components to seal the at least two cooling medium guiding ducts.

9. The double clutch according to claim 8, the sleeve-shaped components being connected to one another, in particular brazed in the region of the bearing regions.

## Revendications

1. Stator pour un embrayage à friction comprenant des lamelles à bain d'huile,
dans lequel l'embrayage est monté sur le stator et le stator alimente l'embrayage en milieu de refroidissement et en milieu de pressurisation,
dans lequel le stator comporte un composant extérieur (100) en forme de douille et un composant intérieur (101) en forme de douille, lesquels sont disposés de manière emboîtée l'un dans l'autre,
dans lequel une surface d'enveloppe intérieure du composant extérieur en forme de douille définit, conjointement avec une surface d'enveloppe extérieure du composant intérieur en forme de douille, au moins un canal de guidage de milieu de refroidissement et
dans lequel le composant extérieur en forme de douille comporte au moins un alésage (104, 105) séparé du canal de guidage de milieu de refroidissement en tant que canal d'acheminement pour le milieu de pressurisation pour commander l'embrayage, **caractérisé en ce que** ledit alésage est conçu complètement dans le composant cylindrique extérieur sans implication du composant cylindrique intérieur, dans lequel le composant extérieur (100) en forme de douille est relié à un boîtier de transmission ou à un boîtier d'entraînement, dans lequel le composant intérieur (101) en forme de douille étant situé en tant que précentrage pour l'embrayage lors du montage dans la cloche d'embrayage et
dans lequel le composant extérieur (100) en forme de douille est conçu sous forme de pièce forgée, dans lequel l'au moins un canal de guidage de milieu de refroidissement est conçu dans le cadre du processus de forgeage.

2. Stator selon la revendication 1, dans lequel la surface d'enveloppe extérieure du composant intérieur (101) en forme de douille est conçue cylindrique, dans lequel, dans la surface d'enveloppe intérieure du composant extérieur (100) en forme de douille, au moins une cavité de type canal est conçu, et dans lequel la surface d'enveloppe intérieure du composant extérieur en forme de douille s'appuie sur la surface d'enveloppe extérieure du composant intérieur en forme de douille dans au moins une zone d'appui de telle sorte qu'un joint d'étanchéité hydraulique est formé entre les deux composants en forme de douille pour étanchéifier le canal de guidage de milieu de refroidissement.

3. Stator selon l'une quelconque des revendications 1 à 3, **caractérisé en ce que**, dans la zone de bord du composant extérieur (100) en forme de douille côté transmission, une zone d'entrée pour le milieu de refroidissement est formée de telle sorte que l'au moins un canal de guidage de milieu de refroidissement comporte une section transversale d'entrée de fluide élargie.

4. Stator selon l'une quelconque des revendications 1 à 3, **caractérisé en ce que** le composant intérieur (101) en forme de douille et le composant extérieur (100) en forme de douille sont pressés l'un contre l'autre et/ou sont raccordés l'un à l'autre au moyen d'au moins un raccordement par brasage.

5. Stator selon l'une quelconque des revendications 1 à 5, **caractérisé en ce que**, sur la surface d'enveloppe intérieure du composant extérieur (100), un épaulement de centrage pour centrer le composant intérieur (101) en forme de douille est situé.

6. Embrayage à friction comprenant un stator présentant les caractéristiques selon l'une quelconque des revendications 1 à 5.

7. Stator pour un embrayage double (3) comprenant deux embrayages simples comportant des lamelles à bain d'huile, dans lequel l'embrayage double (3) s'appuie sur un stator commun, lequel alimente l'embrayage double en milieu de refroidissement et en milieu de pressurisation pour les deux embrayages simples,
dans lequel le stator commun comporte un composant extérieur (100) en forme de douille et un composant intérieur (101) en forme de douille, lesquels sont disposés de manière emboîtée l'un dans l'autre,
dans lequel une surface d'enveloppe intérieure du composant extérieur (100) en forme de douille définit, conjointement avec une surface d'enveloppe extérieure du composant intérieur (101) en forme de douille, au moins deux canaux de guidage de milieu de refroidissement séparés de manière hydraulique l'un de l'autre,
et
dans lequel le composant extérieur (100) en forme de douille comporte au moins deux alésages (104, 105) séparés des canaux de guidage de milieu de refroidissement en tant que canal d'acheminement pour le milieu de pressurisation pour commander l'embrayage (3) et lesdits alésages sont complètement conçus dans le composant cylindrique extérieur (100) sans implication du composant cylindrique intérieur (101), dans lequel le composant cylindrique intérieur serve, en plus de joint d'étanchéité de guidage de milieu de refroidissement, comme épaulement de centrage pour centrer l'embrayage dans un carter d'embrayage, et
dans lequel le composant extérieur (100) en forme de douille est conçu sous forme de pièce forgée, dans lequel l'au moins un canal de guidage de milieu de refroidissement est conçu dans le cadre du processus de forgeage.

8. Stator selon la revendication 7, dans lequel la surface d'enveloppe extérieure du composant intérieur (101) en forme de douille est conçue cylindrique, dans lequel au moins deux cavités de type canal sont conçues dans la surface d'enveloppe intérieure du composant extérieur (100) en forme de douille, et dans lequel la surface d'enveloppe intérieure du composant extérieur (100) en forme de douille s'appuie sur la surface d'enveloppe extérieure du composant intérieur (101) en forme de douille dans au moins deux zones d'appui de telle sorte qu'un joint d'étanchéité hydraulique est formé entre les deux composants en forme de douille pour étanchéifier des au moins deux canaux de guidage de milieu de refroidissement.

9. Embrayage double selon la revendication 8, dans lequel les composants en forme de douille sont raccordés l'un à l'autre dans la zone des zones d'appui, en particulier par brasage.
